Europäisches Patentamt

European Patent Office

Office européen des brevets

(19)

(11) **EP 0 721 159 A1**

(12) **EUROPEAN PATENT APPLICATION**

(43) Date of publication:
10.07.1996 Bulletin 1996/28

(51) Int. Cl.6: **G06F 7/60**, G06F 7/50,
G06F 7/52

(21) Application number: 95120657.2

(22) Date of filing: 28.12.1995

(84) Designated Contracting States:
DE FR GB IT NL

(30) Priority: 03.01.1995 US 368288

(71) Applicant: TEXAS INSTRUMENTS
INCORPORATED
Dallas Texas 75265 (US)

(72) Inventors:
• Mahant-Shetti, Shivaling S.
Los Angeles, CA 90025 (US)
• Lemonds, Carl E., Jr.
Garland, TX 75044 (US)

(74) Representative: Schwepfinger, Karl-Heinz, Dipl.-
Ing.
Prinz & Partner,
Manzingerweg 7
D-81241 München (DE)

(54) **Multiple-input binary adder**

(57) A current mode circuit for the collumn-wise addition of partial product bits in a multiplier. The circuit includes a plurality of digital input terminals PP1-PP15 for receiving a binary input signal. A plurality of transistors 20 are each coupled to an input terminal and produce a current of i0 into a summing node 24 when the input terminal coupled thereto has a binary one signal thereon and no current when the input signal is a binary zero. The current in the summing node 24 is shunted to ground by a diode 30. A high order sum bit C3OUT is produced by a current sensing circuit including transistors 32 and 34 when the current into the summing node is equal or greater than 8i0. A second order sum bit C2OUT is produced by a current sensing circuit including transistors 42, 52 and 54 when the current in the summing node is greater than or equal to 12i0 or greater than or equal to 4i0 but less than 8i0. A third order sum bit C1OUT is produced by a current sensing circuit including transistors 44, 66, 60 and 68 when the current into the summing node is equal to 2i0, 3i0, 6i0, 7i0, 10i0, 11i0, 14i0, or 15i0. A fourth order sum bit SUM is produced by a current sensing circuit including transistors 46, 62, 74, 78, and 80 when the current into the summing node is equal to i0, 3i0, 5i0, 7i0, 9i0, 11i0, 13i0, or 15l0.

Fig. 2

EP 0 721 159 A1

## Description

### FIELD OF THE INVENTION

This invention pertains in general to integrated circuit configurations and more particularly to a high speed Wallace tree multiplier utilizing current mode logic and having improved circuit layout.

### BACKGROUND OF THE INVENTION

Speed of computation is a critical design factor in many systems such as digital computers, digital signal processors and process controllers. These systems increasingly rely on LSI integrated circuits to perform functions such as multiplication. One of the most critical design parameters for multiplication circuits is the speed at which the circuit functions. Also of great importance is the physical area in silicon occupied by the circuit and the ease with which the design can be laid out and verified.

Prior digital systems have utilized a variety of multiplication techniques. One of the simplest techniques involves producing a series of shifted partial products formed of binary numbers. Once the shifted partial products are formed, they are added to form the product. A simple example of this approach consists of multiplying 5 by 3. In binary, 5 is represented as 0101 and 3 is represented as 0011. The multiplication can be formed by providing several partial products such as:

> partial product 1 00000101
> partial product 2 0000101
> partial product 3 000000
> partial product 4 00000

These partial products are then added to form the product which in binary is 00001111 which in decimal is 15, the product of 5 multiplied by 3.

In simple binary multiplication, partial products are formed by adding one bit of the multiplier at time, starting with the least significant bit. One of the simplest ways to generate partial products is to use AND gates as bit-by-bit multipliers. Using this simple multiplication technique, an X bit multiplier generates X partial products which must be summed.

Other approaches have been utilized to speed multiplication. One approach employs encoding techniques to reduce the number of partial products. Reducing the number of partial products reduces the number of additions that need to be performed. Reducing the number of additions in turn reduces the number of clock cycles necessary for binary multiplications.

One prior encoding approach employs a Booth algorithm as an encoding technique to reduce the number of partial products by at least one half. The Booth algorithm increases the speed of a multiply operation which is a time-consuming operation. Booth coding, which is sometimes referred to as Booth recording and decoding, essentially reduces the amount of partial products needed to generate a product.

One of the fastest designs for increasing the speed of multiplication is a Wallace tree. A conventional Wallace tree multiplier is illustrated in the prior art discussion in US Patent 5,325,320. In the implementation illustrated in that patent, the Wallace tree is a combination of carry save adders (CSAs) and carry propagate adders (CPAs). The principal of this design is that two or more addition operations proceed in parallel. Because of this, Wallace tree multipliers run at a minimum of twice the speed of array multipliers. In addition, Wallace tree multipliers in theory require fewer gates than do other types of more conventional multipliers. Nonetheless, Wallace tree multipliers are not frequently chosen by designers of VLSI circuits because designers have discovered that Wallace trees do not have simple regular structures and, accordingly, they are not easy to implement in VLSI technology. As a result, such Wallace tree multipliers occupy significant chip area leaving less room for other circuits. The irregular structure of Wallace tree multipliers also gives rise to difficulties in design verification as well. Furthermore, the irregular structure also lends itself to difficulty in confirming that there are no design layout mistakes. For these and other reasons, VLSI designers have generally chosen other designs such as binary-tree multipliers even though they are not as fast as Wallace tree multipliers.

### SUMMARY OF THE INVENTION

In view of the above mentioned and other problems, it is a principal objective of this invention to provide a Wallace tree multiplier which does not suffer from the problems associated with prior art implementations.

It is still a further objective of this invention to provide a Wallace tree multiplier which occupies less area and uses less metal wiring than prior art implementations.

In achieving these and other objectives of this invention, a circuit for use in a mixed mode Wallace tree multiplier is described. By reason of the fact that current mode circuits are utilized, many metal wires can be eliminated from the design because multiple levels can be represented by a single current signal with multiple levels. The circuit specifically includes a binary input circuits responsive to a plurality of binary bits to be added, one input circuit being responsive to but a single binary bit input thereto. The circuits each produce a current of i0 in response to a "one" bit input thereto and no current in response to a "zero" bit input thereto. All the currents are then summed. The summed current is then converted into a sum bit and several carry bits which form part of the final or part of an intermediate product used in producing the final product of the multiplier.

### DESCRIPTION OF THE DRAWINGS

The above mentioned and other objects, advantages and features of this invention are described hereinafter in greater detail taken in connection with the drawings wherein:

Fig. 1 illustrates how a Wallace tree multiplier functions;

Fig. 2 illustrates the specific circuitry usable in a Wallace tree multiplier to form product bits and partial product bits.

Fig. 3 illustrates a modified circuit of the type shown in Fig. 2 for adding columns with only 3 binary bits;

Fig. 4 illustrates a circuit for producing the operand inputs to the circuit of the type shown in Fig. 2; and

Fig. 5 illustrates a portion of a Wallace tree adder with several circuits of the type shown in Fig. 2 coupled together.

DETAILED DESCRIPTION

In order to fully understand the operation of the present invention, it is important to understand how a Wallace tree multiplier operates. The operation of a Wallace tree multiplier is based on the following expression of the product P of two numbers A and B.

$$P = A \times B$$

where $A = A_H + A_L$ and $B = B_H + B_L$
then
$$P = A_H \times B_H + A_H \times B_L + A_L \times B_H + A_L \times B_H$$

It will be noted that the product is the sum of four different partial products and, accordingly,. these additions can be performed in parallel which will enhance the operational speed of the Wallace tree multiplier.

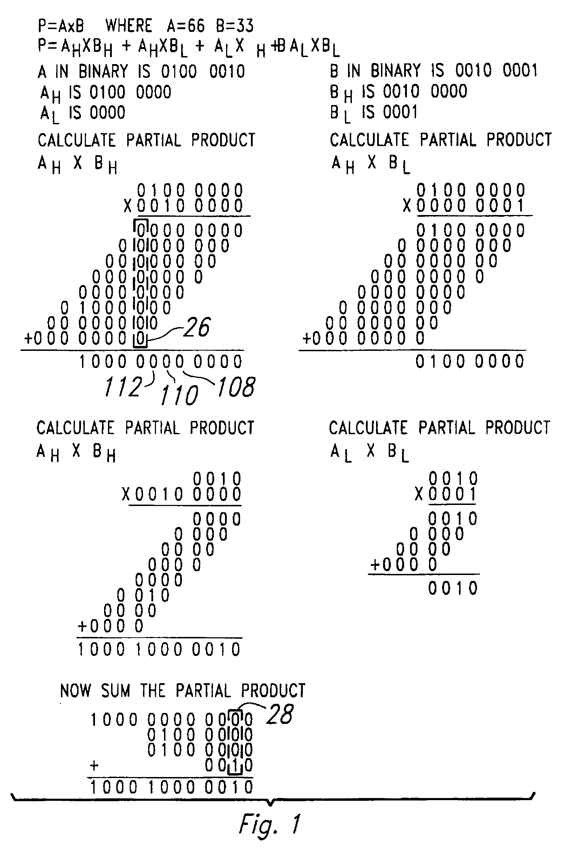

To more fully understand the operation of a Wallace tree multiplier, reference is made to Fig. 1 which illustrates the use of the above equation with respect to multiplying A=66 by B=33. A in binary is 0100 0010 while B in binary is 0010 0000. A can then be expressed as the sum of two binary numbers $A_H$ and $A_L$, respectively the high and low components of A. In binary, they are respectively 0100 0000 and 000 0010. B can also be expressed as the sum of two binary numbers $B_H$ and $B_L$, respectively the high and low components of B. In binary, they are respectively 0010 0000 and 0000 0001.

The product P is calculated above by calculating four partial products. Each multiplication producing a partial product is an example of binary multiplication which is produced by adding a plurality of shifted partial products in a manner well understood in digital computer arts. The four partial products and their calculation is illustrated in Fig. 1. Once all four partial products are calculated, then the sum of these four partial products is calculated to derive the product of the original numbers. By reason of the fact that many of the addition operations forming the partial products can be calculated at the same time, the Wallace tree approach to multiplication permits the numerous operations required to form all the partial products to be formed more quickly than it could be formed using other multipliers which do not have such simultaneous calculations.

While Wallace tree multipliers have been utilized in the past, one of the detriments to using such a multiplier in VLSI circuits is the fact that circuit layout of such multipliers is very complex. This is especially true for multipliers with two large operand capability. As such, even though Wallace tree multipliers are known to be very fast compared to other known multipliers, layout difficulties have led designers to use other types of multipliers in some cases.

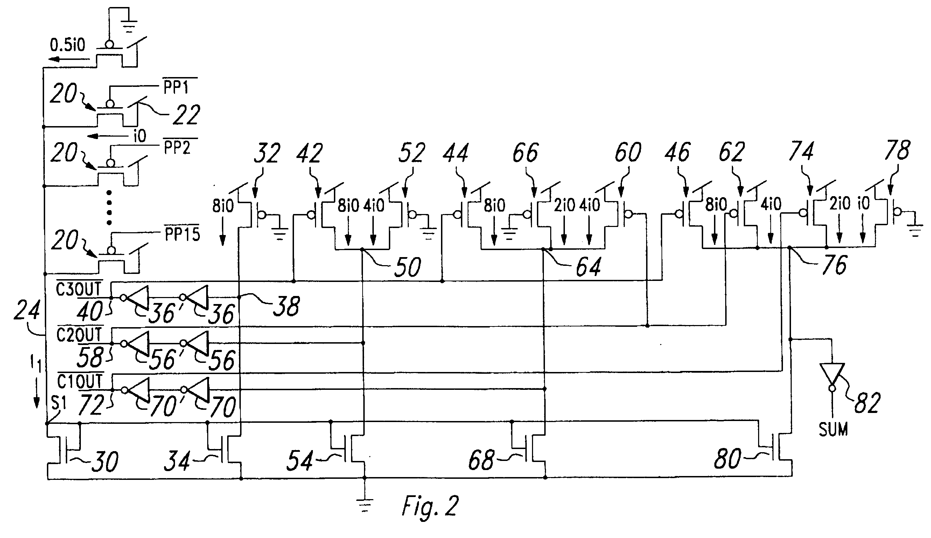

The present invention, as typified in Fig. 2, on the other hand, provides a layout for producing product and partial product bits which can be quite easily implemented in various CMOS technologies. In this implementation, static power consumption is higher than traditional Wallace tree multipliers, however, the dynamic power requirements would be lower. Power down circuits can be developed to reduce the static power requirements during periods when the multiplier is not in use.

The circuit of Fig. 2 has 15 input lines which are identified as PP1, PP2, . . . . , PP15. Each of these input lines is considered to have a binary one thereon when the voltage on that line is low. Each of the input lines, such as PP1, is connected to the gate of a P-type transistor 20. The source of each P-type transistor, such as transistor 20, has its source connected to a positive supply as illustrated at 22. The drains of all the transistors 20 are connected together by a single line 24 which constitutes a summing node for adding all the currents produced by the P-type transistors . In addition, a P-type transistor 21 has its source connected to a positive supply, its gate to ground and its drain coupled to line 24. Transistor 20 always conducts 0.5i0 so that the minimum current in line 24 is 0.5i0 which occurs whenever all the inputs PP1 - PP15 are zero or high.

Each of the transistors 20 coupled to one of the 15 input lines is sized so that when the input line coupled thereto has a low voltage thereon signifying a binary one input, the current conducted by the transistor 20 is i0. Accordingly, when signals are applied to the input lines PP1 - PP15, the current $I_1$ flowing in line 24 ranges from 0.5i0, when all input lines are at a zero level (high), to 15.5i0, when all input lines are at a one level (high).

The inputs comprise the binary inputs from the columns, such as column 26 or 28 in Fig. 1. The topmost bit in column 26, for example, would be connected to the input line PP1 in Fig. 2. The second bit in the column 26, would be connected to the input line PP2. Since the column 26 has only 8 rows, the eighth bit in the column would connect to PP8. As there are many unaccounted for input bits in the circuit of Fig. 2, those bits which are not used are tied to zero (a high level). The resultant sum bit from the current mode circuit for column 26 is bit 30 which appears at the output labeled SUM in Fig. 2. A second circuit of the type shown in Fig. 2 would be utilized to form the sum of the bits in column 28.

The line 24 is coupled to the drain and the source of a transistor 30. The source of transistor 30 is coupled to ground. The configuration of transistors 30, 34, 54, 68 and 80 comprises a well known current mirror.

The circuit includes a first current source which comprises a P-type transistor 32 having its gate coupled to ground and its source coupled to a positive voltage source. This transistor is specially designed to conduct 8i0 of current. One convenient approach to producing such a transistor is to replicate transistor 20, which will conduct i0, eight times and connecting these transistors in parallel.

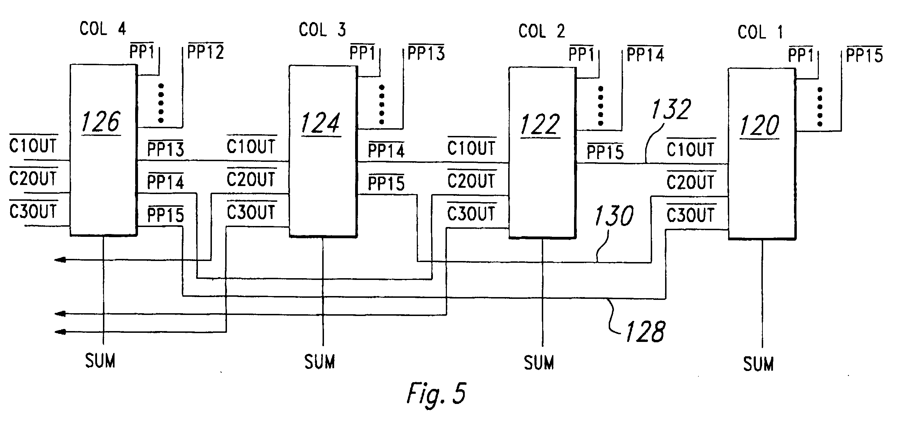

The drain of the transistor 32 is coupled to the drain of N-type transistor 34 and the input to inverter 36. The source of transistor 34 is connected to ground while the gate thereof is connected to node S1. The transistor 34 is identical to transistor 30 and attempts to mirror the current $I_1$ although transistor 32 will limit the maximum current through transistor 34 to 8i0. When the current $I_1$ is less than 8i0, node 38 is high. When the current $I_1$ is greater than 8i0, the voltage at node 38 is low. The low voltage at node 38 is inverted by two series connected inverters 36 and 36' to produce at node 40 a low level signal which is coupled to P-type transistors 42, 44 and 46. As such, transistors 32 and 34 as configured comprise a circuit for detecting when the current $I_1$ is 8i0 or greater and producing a low level signal at 40 indicating this condition. The signal at 40, accordingly, is the high order sum bit for the data bits input to circuit of Fig. 2. When the circuit of Fig. 2 is used in a Wallace tree multiplier as described later, the signal at node 40 comprises C3OUT which is a carry out signal which needs to be added to the bits in the column 3 bit positions to the left of the column in which it was generated. In the conventional Wallace tree approach, this adding of carry bits to the data in other columns greatly complicates the complexity of the design layout. In the present invention, however, the carry bits are simply added as another input to the data being added in another column. This aspect of the invention will be described more fully in connection with Fig. 5.

As noted above, the signal indicating whether the current $I_1$ is greater than or equal to 8i0 at 40 is coupled to transistor 42. When the signal at 40 is low (indicating the current $I_1$ is equal to or greater than 8i0), P-type transistor 42 is conductive. This transistor is sized so that when it conducts it will conduct 8i0 current into node 50. Such a transistor can be designed or produced by replicating eight transistors such as transistor 20 and connecting them in parallel. An additional P-type transistor 52 also conducts 4i0 current into node 50. This transistor 52 can be made by design or replication as already noted. Node 50 connects to the drain of N-type transistor 54 and the input to inverter 56. The source of transistor 54 couples to ground and the gate thereof couples to node S1. The transistor 54 is the same as transistor 30. The transistors 42, 52 and 54 are interoperative to detect when the current $I_1$ is greater than 12i0 or between 4i0 and 7i0. This condition is indicated by a low level at node 50 which is coupled to the series connected inverters 56 and 56' to form a low signal at node 58. This signal at 58 comprises the second order sum bit for the data bits input to the circuit of Fig. 2. It also comprises a carry out C2OUT signal used in a Wallace tree multiplier and is added to the bits in the column two bit positions to the left of the column in which it was generated.

Node 58 couples to the gate of P-type transistors 60 and 62. These transistors 60 and 62 have their sources coupled to a positive supply. The drain of transistor 60 couples to a node 64 as do the drains of transistors 44 and 66. Transistors 44, 60 and 66 are respectively designed to conduct 8i0, 4i0 and 2i0 current when they are conductive and can be made by design or replication. Transistor 66 is always conductive because its gate is grounded. Transistor 44 conducts only when the highest order sum bit is a one and transistor 60 conducts only when the second order sum bit is a one. The node 64 couples to the drain of transistor 68. The gate of transistor 68 connects to node S1 and the source connects to ground. The transistor 68 is identical to transistor 30.

The node 64 also connects to the input of two series connected inverters 70 and 70'. The signal at node 72 is low whenever the third order sum bit for the data bits input to the circuit comprises a one. This signal is used in a Wallace tree multiplier as a carry out signal C1OUT which is added to the bits in the column to the left of the column in which this signal was produced.

The two series connected inverters 70 and 70' have an output coupled to a node 72 which connects to the gate of P-type transistor 74. The source of transistor 74 connects to a positive voltage source and the drain thereof connects to a node 76. A further transistor 78 has its gate grounded, its source coupled to a positive voltage source and its drain connected to node 76. Transistors 46, 62, 74 and 78 are designed to respectively conduct 8i0, 4i0, 2i0, and 1i0 whenever these transistors are conductive which occurs when their gates are low. The current conducted by transistors 46, 62, 74, and 78 enters node 76. This node is connected to the drain of N-type transistor 80 and the input to inverter 82. The source of transistor 80 couples to ground and its gate couples to node S1. The voltage at node 76 is low whenever the lowest order sum bit for the data bits input to the circuit of Fig. 2 comprises a one. The inverter 82 produces the lowest order sum bit at its output which comprises a one when the level at the output terminal labeled SUM is high and a zero when the level at the terminal labeled SUM is low.

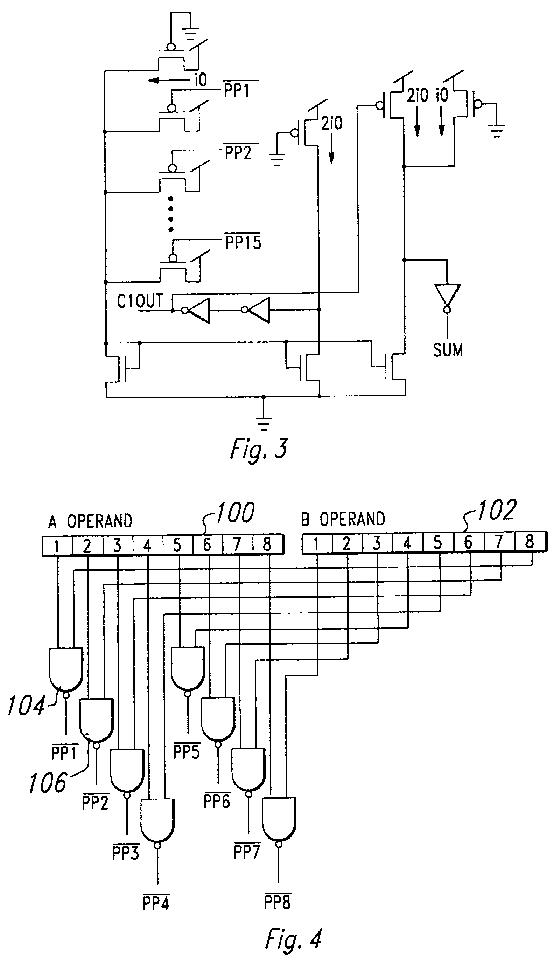

Fig. 3 illustrates a circuit generally of the type illustrated in Fig. 2, however, Fig. 3 is a circuit suitable for adding a column containing only 3 binary bits. Those of skill in the art will readily appreciate that the circuit of Fig. 2 can be modified to provide a circuit for adding a column of 7 binary bits utilizing the readily apparent approach for modifying that circuit.

Fig. 4 illustrates, in part, the manner in which the circuit in Fig. 2 can be coupled into a Wallace tree adder of the type illustrated in Fig. 1. As already noted, the circuit of Fig. 2 can be utilized to perform the sum of the column of binary bits illustrated as column 26. The $A_H$ is stored in the A operand register 100 which has eight bit positions numbered from 1 to 8. The $B_H$ operand is stored in the B operand register 102. The top most bit in the column 26 is produced by the NAND 104 which has two inputs thereto, the 1 bit from the A operand register 100 and the 8 bit from the B operand register 102. The output of NAND gate 104 is PP1 which is an input to the circuit of Fig. 2. The second bit position in column 26 is formed by NAND 106 which has two inputs thereto, the 2 bit from the A operand register 100 and the 7 bit from the B operand register 102. The output of NAND gate 106 comprises PP2 which is an input to the circuit of Fig. 2. The remaining bits in the column 26 of Fig. 1 are formed by the remaining NAND gates illustrated in Fig. 4. As such, all the inputs PP1 through PP8 are produced by the circuit of Fig. 4.

The circuitry of Fig. 2 is utilized in the portion of the Wallace tree adder of Fig. 5. The circuit of Fig. 2 is coupled into the circuit and is illustrated at 120, 122, 124, 126. The circuit 120 has 15 inputs thereto, although not all of them will necessarily be used. This circuit 120 has its high order bit or C3OUT coupled by line 128 to the PP15 input for the circuit 126 located 3 columns to the left of the first column. The second order bit or C2OUT of circuit 120 is coupled by line 130 to the PP15 input to the circuit 124 located two columns to the left of column 1. The third order bit or C1OUT of circuit 120 is coupled by line 132 to the PP15 input to circuit 122 located in column 2. In a similar fashion, the high order bits output from the circuits 122, 124 and 126 are coupled to circuits in columns to the left of the column in which they were developed. As will be apparent to those of skill in the art, this configuration contributes to the speed of operation of the present invention. It also contributes to an easier circuit layout when the present multiplier is implemented in VLSI.

While the above description has concentrated on the circuits illustrated in the drawings, those of skill in the art will recognize that the circuits illustrated are representative to the invention and that many modifications in form can be made without departing from the spirit and scope of the present invention.

**Claims**

1. A circuit for adding a plurality of binary bits comprising, in combination:
    more than two current sources each responsive to a single binary bit for producing a current i0 when the value of the binary bit input thereto is a one and for producing no current when the value of the binary bit input thereto is zero;
    current summing means responsive to said current sources for producing a current Ni0 where N is the number of binary bits input to all said current sources having a binary value of one; and
    current sensing means responsive to said current Ni0 to produce a binary output representative of the binary sum of all the binary bits input to said plurality of current sources.

2. The adder of Claim 1 wherein said current sensing means includes means to detect whether Ni0 is greater than or equal to $2^{n-1}i0$ and if so to produce a high order sum bit, where n is the number of sum bits in said binary sum.

3. The adder of Claim 2 wherein said current sensing means includes means to detect whether Ni0 is greater than or equal to $2^{n-1}i0 + 2^{n-2}i0$ or less than $2^{n-1}i0$ and greater than or equal to $2^{n-2}i0$ and if so, to produce second order sum bit.

4. A binary bit adder for use in a Wallace tree multiplier comprising, in combination:
    $2^n - 1$ input terminals where n is an integer greater than 1, each said terminal for receiving a binary input signal;
    a transistor coupled to each said input terminal for producing a current i0 when the input thereto is a binary one and for producing no current when the input thereto is a binary zero;
    a summing node for receiving all the currents produced by all said transistors;
    a circuit element for shunting all the current produced by said transistors to ground;
    a high order bit detector transistor conducting a current of $2^{n-1} i0$;
    a shunting transistor responsive to the current in said summing node for shunting the current from said high order bit detector transistor to ground when said current in said summing node is $2^{n-1} i0$ or greater; and
    means responsive to said shunting transistor shunting said current from said high order bit detector transistor to ground to produce a high order sum bit for all said binary input signals input to said adder.

5. The binary bit adder for use in a Wallace tree multiplier of Claim 4 additionally including:
    means responsive to said high order bit being a one to produce a current of $2^{n-1} i0$ into a second summing node and for producing no current into said second summing node when said high order bit is a zero;
    means to produce a second current of $2^{n-2}i0$ into said second summing node;
    means for sinking said current into said second summing node if the current into said first summing node is equal to or greater than $(2^{n-1} + 2^{n-2})i0$ or greater than or equal to $2^{n-2}i0$ and less than $2^{n-1} i0$; and
    means responsive to said means for sinking to produce a second order sum bit when the current into said first summing node is equal to or greater than $(2^{n-1} + 2^{n-2})i0$ or greater than or equal to $2^{n-2}i0$ and less than $2^{n-1} i0$.

6. A binary bit adder for use in a Wallace tree multiplier comprising, in combination:

fifteen input terminals, each for receiving a binary input signal;

a transistor coupled to each said input terminal for producing a current i0 when the input thereto is a binary one and for producing no current when the input thereto is a binary zero;

a first summing node for receiving all the current produced by all said transistors;

a diode coupled to said first summing node for shunting all the current into said first summing node to ground;

a high order bit producing circuit responsive to the voltage drop across said diode to produce a high order binary bit of one at the output thereof when the current into said first summing node is equal or greater than 8i0;

a second order bit producing circuit responsive to the voltage drop across said diode to produce a second order binary bit of one when the current into said first summing node is either 4i0, 5i0, 6i0, 7i0, 12i0, 13i0, 14i0, or 15i0;

a third order bit producing circuit responsive to the voltage drop across said diode to produce a third order binary bit of one when the current into said first summing node is either 2i0, 3i0, 6i0, 7i0, 10i0, 11i0, 14i0 or 15i0; and

a fourth order bit producing circuit responsive to the voltage drop across said diode to produce a fourth order binary bit of one when the current into said first summing node is either i0, 3i0, 5i0, 7i0, 9i0, 11i0, 13i0, 15i0.

7. The adder of Claim 1 wherein said current sensing means includes means to detect whether $Ni0$ is greater than or equal to $2^{n-1}i0 + 2^{n-2}i0$ or less than $2^{n-1}i0$ and greater than or equal to $2^{n-2}i0$ and if so, to produce second order sum bit.

8. The binary bit adder for use in a Wallace tree multiplier of Claim 4 wherein said circuit element is a diode.

9. The binary bit adder for use in a Wallace tree multiplier of Claim 4 wherein said circuit element is a circuit component which develops a voltage thereacross which is a function of the current passing therethrough.

$P = A \times B$  WHERE  A=66 B=33

$P = A_H \times B_H + A_H \times B_L + A_L \times B_H + A_L \times B_L$

A IN BINARY IS 0100 0010                   B IN BINARY IS 0010 0001

$A_H$ IS 0100 0000                          $B_H$ IS 0010 0000

$A_L$ IS 0000                               $B_L$ IS 0001

CALCULATE PARTIAL PRODUCT                   CALCULATE PARTIAL PRODUCT
$A_H \times B_H$                            $A_H \times B_L$

```
        0100 0000                               0100 0000
      X 0010 0000                             X 0000 0001
        0 000 0000                               0100 0000
      0 100 00 000                            0 0000 000
     00 100 00 00                            00 0000 00
    000 00 00 0                             000 0000 0
   0000 00 00                              0000 0000
  0 1000 00 0                             0 0000 000
 00 0000 0 0  -26                        00 0000 00
+000 0000 0                             +000 0000 0
 ──────────────                         ──────────────
 1000 0000 0000                            0100 0000
   112  110  108
```

CALCULATE PARTIAL PRODUCT                   CALCULATE PARTIAL PRODUCT
$A_H \times B_H$                            $A_L \times B_L$

```
        0010                                    0010
    X 0010 0000                             X 0001
        0000                                    0010
      0 000                                   0 000
     00 00                                   00 00
    000 0                                  +000 0
   0000                                     ──────
  0 000                                      0010
 0 010
00 00
+000 0
──────────────
1000 1000 0010
```

NOW SUM THE PARTIAL PRODUCT

```
1000 0000 0000  -28
     0100 0000
     0100 0000
+         0010
──────────────────
1000 1000 0010
```

Fig. 1

Fig. 2

Fig. 3

Fig. 4

Fig. 5

European Patent
Office

**EUROPEAN SEARCH REPORT**

Application Number

EP 95 12 0657

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR-A-2 560 409 (LARDY JEAN LOUIS) 30 August 1985 <br> * figures 1,2,5,10 * | 1-9 | G06F7/60 <br> G06F7/50 <br> G06F7/52 |
| X | FR-A-2 599 528 (CENTRE NAT RECH SCIENT) 4 December 1987 | 1 | |
| A | * page 12, line 25 - page 13, line 3; figure 6 * | 6 | |
| X | INTERNATIONAL JOURNAL OF ELECTRONICS, vol. 66, no. 1, 1 January 1989, pages 19-34, XP000111343 PELAYO F ET AL: "SOME IMPROVEMENTS IN THE IMPLEMENTATION OF MULTITHRESHOLD AND MULTIVALUED I2L CIRCUITS" | 1-3,7 | |
| A | * figures 1,2A,9B * | 4,6,8 | |
| A | FR-A-2 469 836 (HENNION BERNARD) 22 May 1981 <br> * figures 3,7,9,11 * | 5 | |
| | | | TECHNICAL FIELDS SEARCHED (Int.Cl.6) |
| | | | G06F |

The present search report has been drawn up for all claims

| Place of search | Date of completion of the search | Examiner |
|---|---|---|
| THE HAGUE | 20 March 1996 | Verhoof, P |

EPO FORM 1503 03.82 (P04C01)